# EUROPEAN PATENT SPECIFICATION

(11) **EP 2 413 094 B1**
(45) Date of publication and mention of the grant of the patent: **26.03.2014**
(21) Application number: 11174365.4
(22) Date of filing: 18.07.2011
(51) Int. Cl.: G01B 11/06, G01B 21/08, G01N 21/88, F21K 99/00

(54) **Infrared LED source for thermal imaging**
Infrarot-LED-Quelle zur Thermographie
Source de DEL à infrarouge pour imagerie thermique

(30) Priority: 27.07.2010 US 844026
(43) Date of publication of application: 01.02.2012
(73) Proprietor: United Technologies Corporation, Hartford, CT 06101 (US)
(72) Inventor: Raulerson, David A., Palm Beach Garden, FL 33410 (US); Smith, Kevin D., Glastonbury, CT 06033 (US); Ouyang, Zhong, Glastonbury, CT 06033 (US)
(74) Representative: Leckey, David Herbert

(56) References cited:
- WO-A1-00/11400
- WO-A1-00/63642
- WO-A2-98/52384
- DE-A1- 3 906 555
- DE-A1- 4 032 327
- DE-A1- 19 930 154
- US-A- 4 893 223
- US-A1- 2007 285 766

## Description

### BACKGROUND

The present disclosure is related to thermal imaging, and particularly to an LED array for a flash thermography based thermal imaging device.

When inspecting parts for quality control, one aspect reviewed for quality is the thickness of the part. Various techniques are used in the art to determine thickness, and thereby determine if the work piece meets quality control standards. One technique used is thermal imaging via flash thermography. Flash thermography based thermal imagers operate by subjecting the work piece to a short flash of light (a "pulse") from a flash lamp such as an xenon strobe. A sensor in the thermal imaging device detects Infra-Red (IR) radiation from the heat being emitted from the part, and determines the magnitude of the sensed IR radiation. A controller then creates a thermal image of the work piece based on the magnitude of the sensed IR radiation and the time of maximum occurrence.

A system having the features of the preamble of claim 1 is disclosed in DE 19930154 A1. Other thermography systems are disclosed in WO 00/63642 A1 and US 2007/0285766 A1. Inspection systems using multiple light sources are disclosed in US 4893223 A, DE 3906555 A1, WO 98/52384 A2, DE 4032327 A1 and WO 00/11440 A1.

### SUMMARY

From a first aspect, the present invention provides a thermal imaging device as set forth in claim 1.

From a second aspect, the invention provides a method for creating a thermal image as set forth in claim 8.

These and other features of the present invention can be best understood from the following specification and drawings, the following of which is a brief description.

### BRIEF DESCRIPTION OF THE DRAWINGS

Figure 1 illustrates a schematic example of a thermal imager.
Figure 1A illustrates a schematic example of a controller for the thermal imager of Figure 1.
Figure 2 illustrates another schematic example of a thermal imager.
Figure 3A illustrates a side view of an example IR LED housing for a thermal imager.
Figure 3B illustrates a top view of an example IR LED housing for a thermal imager.
Figure 3C illustrates a bottom view of an example IR LED housing for a thermal imager.
Figure 4 illustrates a flow chart of a method by which a thermal imager captures a thickness of a part.

### DETAILED DESCRIPTION OF THE PREFERRED EMBODIMENT

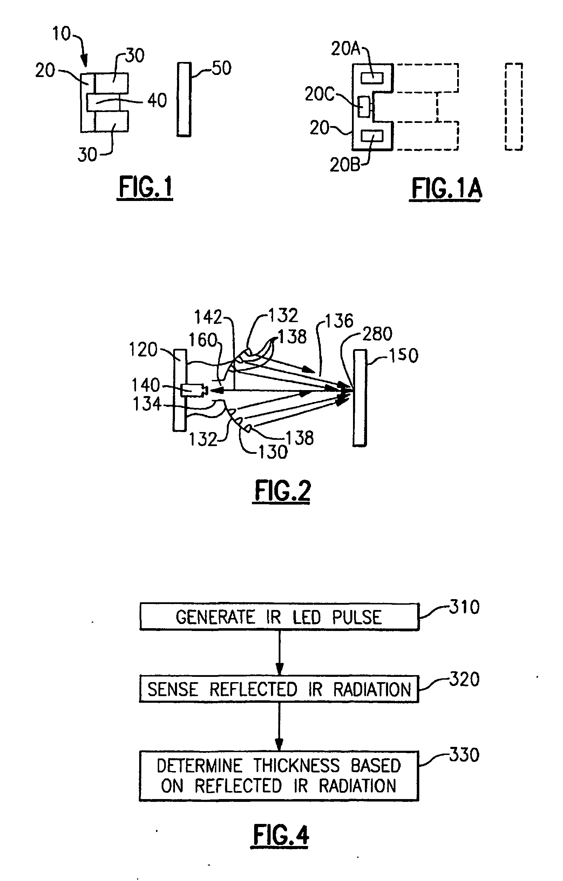

Schematically illustrated in Figure 1 is an example thermal imaging device 10. The thermal imaging device 10 includes a controller 20, a flash source 30 and an IR sensor 40. In front of the thermal imaging device 10 is a work piece 50. The work piece 50 can be of any shape or material. When the thermal imager 10 is activated, the flash source 30 emits a pulse of IR radiation. The pulse is a short duration pulse. By way of example, the pulse could be under 3 ms. The electromagnetic emissions from the pulse impact the work piece 50. The electromagnetic emissions are absorbed and reflected by the work piece 50 and a portion of the thermal energy radiated by the work piece 50 and strike the sensor 40. The reflected radiation should be minimized.

The sensor 40 detects the magnitude of the IR portion of the emitted electromagnetic emissions, and communicates the magnitude to a controller 20 such as a computer, a microprocessor, or programmable logic controller. The controller 20 also determines the magnitude of the emitted IR radiation from the pulse based on the duration of the pulse and the magnitude of power provided to the flash source 30 during that duration. The controller 20 determines the thickness of the work piece 50 by calculating the Temperature-time curve of the sample surface temperature decay history. The controller 20 can then generate a thermal image of the work piece 50 using known techniques.

IR radiation covers wavelengths of approximately 770 nm to 1 mm, whereas the spectrum emitted by xenon strobe light, as is used in conventional systems, covers the full visible spectrum and ultraviolet spectrum as well as the IR portion of the electromagnetic spectrum. Therefore, when using a xenon strobe to create the IR pulse, a full spectrum burst containing high levels of visible light and UV light along with the IR radiation is created. Such a burst requires a large expenditure of energy creating the pulse in the portions of the electromagnetic spectrum aside from the IR portion. Contrary to the burst created by a xenon strobe, a flash source 30 which is constructed out of an array of IR LEDs will emit minimal radiation outside of the IR portion of the electromagnetic spectrum, thereby reducing energy spent generating electromagnetic radiation outside of the IR portion of the spectrum. IR LEDs are LEDs which emit no visible light and UV light when an electric charge is applied, yet still emit a high magnitude of IR radiation.

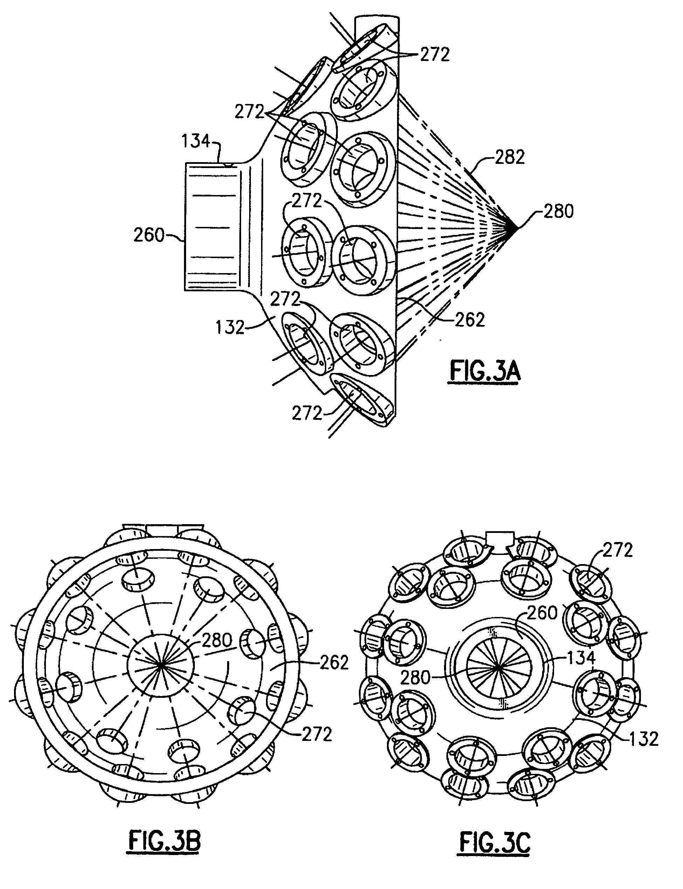

Figure 2 illustrates another schematic diagram of an example thermal imager 100 using an IR LED array 130 as the flash source. As in the example of Figure 1, the thermal imager 100 has a sensor 140, a controller 120 and an IR LED array 130 in place of the flash source 30. The IR LED array 130 has a housing with a cup shaped component 132 and a cylindrical component 134. The cup shaped component 134 has multiple LED sockets with installed IR LED's 138 arranged about its surface. The cylindrical component 134 is hollow, thereby allowing IR radiation 142 to pass through the LED array housing and strike the sensor 140. An example physical arrangement of the IR LED array housing is illustrated in Figures 3A, 3B, and 3C, and a more detailed description of the example arrangement is provided below.

The sensor 140 is aligned with the cylindrical component 134 such that IR radiation 142 from a pulse that is reflected off the work piece 150, will pass through the cylindrical component 134 and strike the sensor 140. Multiple IR LEDs are arranged on the inside of the cup shaped component 132, and are angled such that emitted IR radiation 136 strikes the work piece 150 at a single focal point 280 which is shared by all the IR LEDs. When the IR radiation 136 strikes the work piece 150, a large portion of the IR radiation is absorbed by the work piece 150, and a small portion reflects off the work piece 150. The sensor 140 senses the magnitude of the emitted IR radiation 142.

The sensor 140 is connected to the controller 120. The controller 120 receives a signal from the sensor 140 when the emitted IR radiation 142 strikes it and determines the magnitude of the emitted IR radiation 142. The controller 120 may also include a simple electrical control circuit for providing and limiting power to the IR LED array 130. The control circuit can be constructed according to any number of known principles using standard components. According to the invention the controller 120 determines the magnitude of the IR radiation 136 which was output from the IR LED array 130 based on the duration of the pulse as well as the magnitude of electrical power which was transmitted through the control circuit during the pulse.

Figures 3A, 3B, and 3C illustrate an example LED array housing, such as could be used in the example thermal imagers of Figures 1 and 2. Figure 3A illustrates a side view, Figure 3B illustrates a top view, and Figure 3C illustrates a bottom view of the IR LED array housing. The IR LED array housing has a cylindrical component 134 and a cup shaped component 132. The cylindrical component 134 has an opening 260 on a first end, and is connected to the cup shaped component 132 at a second end. The cup shaped component 132 has an opening 262 on a first end opposite the cylindrical component 134. The cup shaped component 132 and the cylindrical component 134 are joined at respective second ends. The cylindrical component 134 opening 260 and the cup shaped component 132 opening are connected via a passageway, thereby forming a substantially tube shaped IR LED array housing through which electromagnetic radiation can pass.

Spaced around the cup shaped component 134 are multiple LED sockets 272. In the illustrated example of Figures 3A, 3B, and 3C the sockets 272 are arranged in two circular patterns approximately concentric to a cross-section of the first and second openings 260, 262 of the cup shaped component 132 and the cylindrical component 134. The sockets 272 are further arranged such that when LEDs are installed in the sockets 272 and illuminated, each of the LEDs will share at least a single focal point 280 away from the cup shaped component 132. This arrangement is illustrated in the Figures using axis lines 282 which define a vertical axis of each socket opening and a corresponding axis line 282 of each installed LED.

While the LED sockets 272 are arranged such that they share a focal point 280 while illuminated, it is understood that an alternate arrangement could be used which causes a broader beam without a single focal point, thereby encompassing the entire part, and generating an image based on the IR reflection from the broader beam. While the cup shaped component 132 and the cylindrical component 134 are illustrated having concentric circular cross sections, other shaped cross sections could be used, as well as non-concentric cross sections.

Referring again to Figure 1 a controller 20 executes a thermal imaging process. The functions of the process are disclosed in terms of a functional block diagram (see Figure 4) and may be executed in either dedicated hardware circuitry, or in a programmed software routine capable of executing in a microprocessor based environment. The controller 20, typically includes a processor 20A, a memory 20B, and an interface 20C. The memory 20B may be any known memory type which is capable of storing instructions fro performing the thermal imaging process.

Illustrated in Figure 4 is a method for generating a thermal image of a work piece using a thermal imager. Initially the thermal imager generates a pulse of IR radiation using an array of IR LEDs which are controlled by a controller in the Generate IR LED Pulse step 310. In order to emit the pulse, the controller allows a short electrical current to pass from a voltage source to the IR LED array, thereby causing the IR LED array to begin emitting radiation. The magnitude of electrical current required to emit the necessary amounts of IR radiation is sufficiently small due to the nature of IR LEDs, and therefore the controller can use standard power circuitry to control the current. The controller allows the IR LEDs to emit radiation for a predetermined duration, typically less than 3 ms, and then prevents electrical power from reaching the IR LED array, thereby stopping the pulse.

During the IR radiation pulse, the IR radiation impacts a work piece which is in front of the thermal imager and a portion of the thermal radiation by the work piece 50 is radiated back toward the thermal imager. The emitted portion of the IR radiation is sensed using a sensor within the thermal imager in the Sense Emitted IR Radiation step 320. The controller is communicatively coupled to the sensor and receives the sensed data. Based on the sensed data, the duration of the pulse, and the magnitude of the electrical power provided during the duration the thermal imager can determine the thickness of the work piece according to known thermal imaging techniques in the Determine Thickness Based on emitted IR Radiation step 330.

While an example method has been illustrated above, it is understood that minor variations to the apparatus or method fall within this disclosure. Such variations include varying the duration of the pulse time, and varying the portion of the electromagnetic spectrum, which is used in the imaging process.

Although example embodiments have been disclosed, a worker of ordinary skill in this art would recognize that certain modifications would come within the scope of this invention as defined by the appended claims.

## Claims

1. A thermal imaging device (100) comprising:
an LED flash array (130);
a sensor (140) capable of detecting IR radiation; and
a controller (120) coupled to said LED flash array (130) and said sensor (140), said controller (120) operable to cause said LED flash array (130) to emit a pulse of radiation, such that in use said sensor (140) detects IR radiation (142) radiated off an object (150) in front of said thermal imaging device (100), the controller (120) being arranged to determine a thickness of said object (150) based on a magnitude of said detected radiation (142); **characterised in that** said LED flash array comprises:
a first opening (260) in a substantially cylindrical component (134) of said LED flash array (130);
a second opening (262) in a substantially cup shaped component (132) of said LED flash array (130);
said second opening (262) having a larger circumference than said first opening (160);
said substantially cylindrical component (132) and said substantially cup shaped component (134) being connected via a shared opening;
a passageway joining said first opening (260) and said second opening (262) through said substantially cup shaped component (132), said shared opening and said substantially cylindrical component, (134), the Passageway joining said components such that electromagnetic radiation may pass through said LED flash array (130);
a plurality of LED sockets (272) arranged on said cup shaped component (132), wherein each of said LED sockets (272) houses an installed Infra-Red (IR) LED (138); and wherein:
said controller (120) is operable to determine a magnitude of IR radiation (136) output from the IR LED flash array during the pulse based on the duration of the pulse and the magnitude of the electrical power provided during the pulse.

2. The thermal imaging device of claim 1, comprising an IR LED (138) installed in each of said LED sockets (272).

3. The thermal imaging device of claim 1 or 2, wherein each of said IR LED's (138) emits IR radiation and radiation across the remainder of the electromagnetic spectrum when a current is applied, and wherein said IR radiation is a high intensity relative to said radiation across the remainder of the electromagnetic spectrum.

4. The thermal imaging device of claim 3, wherein said IR radiation consists essentially of wavelengths in the inclusive range of 770 nm to 1 mm.

5. The thermal imaging device of any preceding claim, wherein each of said LED sockets (272) comprises electrical connections capable of connecting installed LEDs (138) to a controller (120).

6. The thermal imaging device of any preceding claim, wherein each of said LED sockets (272) are configured about said substantially cup shaped component (132) such that installed LEDs share at least one focal point (280).

7. The thermal imaging device of any preceding claim, wherein said substantially cylindrical component (130) is tube shaped.

8. A method for creating a thermal image comprising;
generating an infra-red (IR) pulse using an LED flash array (130) controlled by a controller (120), said pulse impacting an object, wherein said LED flash array (130) comprises:
a first opening (260) in a substantially cylindrical component (134) of said LED flash array (130);
a second opening (262) in a substantially cup shaped component (132) of said LED flash array (130);
said second opening (262) having a larger circumference than said first opening (260);
said substantially cylindrical component (132) and said substantially cup shaped component (134) are connected via a shared opening;
a passageway joining said first opening (160) and said second opening (162) through said substantially cup shaped component (132), said shared opening and said substantially cylindrical component (134), the passageway joining said components such that electromagnetic radiation may pass through said LED flash array (130); and
a plurality of LED sockets (272) arranged on said cup shaped component (132), wherein each of said LED sockets (272) houses an installed Infra-Red (IR) LED (138);
sensing IR radiation (142) emitted by the object in response to said pulse using a sensor;
determining a thickness of the object based on a magnitude of said emitted IR radiation (142) using a controller (129), said controller (120) being operable to determine a magnitude of IR radiation (136) output from the LED flash array during the pulse based on the duration of the pulse and the magnitude of the electrical power provided during the pulse.

9. The method of claim 8, wherein said step of generating an IR pulse further comprises generating a short electrical current using said controller (120), thereby causing said IR pulse.

10. The method of claim 9, wherein said electrical current has a duration of less than 3 ms.

11. The method of claim 10, wherein said electrical current is a low power electrical current.

12. The method of any of claims 8 to 11, wherein said step of generating an IR pulse comprises emitting a radiation pulse which consists essentially of IR radiation.

13. The method of claim 12, wherein said step of generating an IR pulse comprises pulling a plurality of aligned IR LEDs simultaneously, thereby causing a single pulse.

## Patentansprüche

1. Wärmebildgabevorrichtung (100), die Folgendes umfasst:
eine LED-Blitzlichtanordnung (130);
einen Sensor (140), der in der Lage ist, IR-Strahlung zu detektieren; und
eine Steuereinheit (120), die mit der LED-Blitzlichtanordnung (130) und dem Sensor (140) gekoppelt ist, wobei die Steuereinheit (120) dafür geeignet ist, die LED-Blitzlichtanordnung (130) zu veranlassen, einen Strahlungsimpuls auszusenden, so dass der Sensor (140) während des Gebrauchs IR-Strahlung (142) detektiert, die von einem Objekt (150) vor der Wärmebildgabevorrichtung (100) abgestrahlt wird, wobei die Steuereinheit (120) dafür ausgelegt ist, eine Dicke des Objekts (150) anhand einer Größenordnung der detektierten Strahlung (142) zu bestimmen, **dadurch gekennzeichnet, dass** die LED-Blitzlichtanordnung Folgendes umfasst:
eine erste Öffnung (260) in einer im Wesentlichen zylindrischen Komponente (134) der LED-Blitzlichtanordnung (130);
eine zweite Öffnung (262) in einer im Wesentlichen napfförmigen Komponente (132) der LED-Blitzlichtanordnung (130);
wobei die zweite Öffnung (262) einen größeren Umfang aufweist als die erste Öffnung (160);
wobei die im Wesentlichen zylindrische Komponente (132) und die im Wesentlichen napfförmige Komponente (134) über eine gemeinsame Öffnung verbunden sind;
wobei ein Durchgang die erste Öffnung (260) und die zweite Öffnung (262) durch die im Wesentlichen napfförmige Komponente (132), die gemeinsame Öffnung und die im Wesentlichen zylindrische Komponente (134) verbindet, wobei der Durchgang die Komponenten in einer solchen Weise verbindet, dass elektromagnetische Strahlung die LED-Blitzlichtanordnung (130) passieren kann;
mehrere LED-Sockel (272), die auf der napfförmigen Komponente (132) angeordnet sind; wobei jeder der LED-Sockel (272) eine installierte Infrarot (IR)-LED (138) aufnimmt; und wobei:
die Steuereinheit (120) dafür geeignet ist, eine Größenordnung einer IR-Strahlungsabgabe (136) von der IR-LED-Blitzlichtanordnung während des Impulses anhand der Dauer des Impulses und der Größenordnung der während des Impulses bereitgestellten elektrischen Leistung festzustellen.

2. Wärmebildgabevorrichtung nach Anspruch 1, die eine IR-LED (138) umfasst, die in jedem der LED-Sockel (272) installiert ist.

3. Wärmebildgabevorrichtung nach Anspruch 1 oder 2, wobei jede der IR-LEDs (138) IR-Strahlung sowie Strahlung über den Rest des elektromagnetischen Spektrums aussendet, wenn ein Strom angelegt wird, und wobei die IR-Strahlung im Vergleich zu der Strahlung über den Rest des elektromagnetischen Spektrums von hoher Intensität ist.

4. Wärmebildgabevorrichtung nach Anspruch 3, wobei die IR-Strahlung im Wesentlichen aus Wellenlängen im Bereich von 770 nm bis 1 mm besteht.

5. Wärmebildgabevorrichtung nach einem der vorangehenden Ansprüche, wobei jeder der LED-Sockel (272) elektrische Verbindungen umfasst, die in der Lage sind, installierte LEDs (138) mit einer Steuereinheit (120) zu verbinden.

6. Wärmebildgabevorrichtung nach einem der vorangehenden Ansprüche, wobei jeder der LED-Sockel (272) in einer solchen Weise um die im Wesentlichen napfförmige Komponente (132) herum konfiguriert ist, dass die installierten LEDs mindestens einen Brennpunkt (280) gemeinsam haben.

7. Wärmebildgabevorrichtung nach einem der vorangehenden Ansprüche, wobei die im Wesentlichen zylindrische Komponente (130) röhrenförmig ist.

8. Verfahren zum Erzeugen eines Wärmebildes, das Folgendes umfasst:
Generieren eines Infrarot (IR)-Impulses unter Verwendung einer LED-Blitzlichtanordnung (130), die durch eine Steuereinheit (120) gesteuert wird, wobei der Impuls auf ein Objekt auftrifft, wobei die LED-Blitzlichtanordnung (130) Folgendes umfasst:
eine erste Öffnung (260) in einer im Wesentlichen zylindrischen Komponente (134) der LED-Blitzlichtanordnung (130);
eine zweite Öffnung (262) in einer im Wesentlichen napfförmigen Komponente (132) der LED-Blitzlichtanordnung (130);
wobei die zweite Öffnung (262) einen größeren Umfang aufweist als die erste Öffnung (260);
wobei die im Wesentlichen zylindrische Komponente (132) und die im Wesentlichen napfförmige Komponente (134) über eine gemeinsame Öffnung verbunden sind;
wobei ein Durchgang die erste Öffnung (160) und die zweite Öffnung (162) durch die im Wesentlichen napfförmige Komponente (132), die gemeinsame Öffnung und die im Wesentlichen zylindrische Komponente (134) verbindet, wobei der Durchgang die Komponenten in einer solchen Weise verbindet, dass elektromagnetische Strahlung die LED-Blitzlichtanordnung (130) passieren kann;
mehrere LED-Sockel (272), die auf der napfförmigen Komponente (132) angeordnet sind, wobei jeder der LED-Sockel (272) eine installierte Infrarot (IR)-LED (138) aufnimmt;
Detektieren von IR-Strahlung (142), die durch das Objekt in Reaktion auf den Impuls ausgesendet wird, unter Verwendung eines Sensors;
Bestimmen einer Dicke des Objekts anhand einer Größenordnung der ausgesendeten IR-Strahlung (142) unter Verwendung einer Steuereinheit (120), wobei die Steuereinheit (120) dafür geeignet ist, eine Größenordnung der IR-Strahlungsabgabe (136) von der LED-Blitzlichtanordnung während des Impulses anhand der Dauer des Impulses und der Größenordnung der während des Impulses bereitgestellten elektrischen Leistung festzustellen.

9. Verfahren nach Anspruch 8, wobei der Schritt des Generierens eines IR-Impulses des Weiteren das Generieren eines kurzen elektrischen Stroms unter Verwendung der Steuereinheit (120) umfasst, wodurch der IR-Impuls hervorgerufen wird.

10. Verfahren nach Anspruch 9, wobei der elektrische Strom eine Dauer von weniger als 3 ms hat.

11. Verfahren nach Anspruch 10, wobei der elektrische Strom ein elektrischer Schwachstrom ist.

12. Verfahren nach einem der Ansprüche 8 bis 11, wobei der Schritt des Generierens eines IR-Impulses das Aussenden eines Strahlungsimpulses umfasst, der im Wesentlichen aus IR-Strahlung besteht.

13. Verfahren nach Anspruch 12, wobei der Schritt des Generierens eines IR-Impulses umfasst, mehrere aufeinander ausgerichtete IR-LEDs gleichzeitig zu pulsen, wodurch ein einzelner Impuls hervorgerufen wird.

## Revendications

1. Dispositif d'imagerie thermique (100) comprenant :
un réseau éclair de DEL (130) ;
un capteur (140) qui est à même de détecter un
rayonnement IR ; et
un dispositif de commande (120) couplé audit réseau
éclair de DEL (130) et audit capteur (140), ledit dispositif de commande (120) étant à même d'amener ledit réseau éclair de DEL (130) à émettre une impulsion de rayonnement de sorte que, en service, ledit capteur (140) détecte un rayonnement IR (142) rayonné d'un objet (150) devant ledit dispositif d'imagerie thermique (100), le dispositif de commande (120) étant aménagé pour déterminer l'épaisseur dudit objet (150) sur la base d'une grandeur dudit rayonnement détecté (142), **caractérisé en ce que** ledit réseau éclair de DEL comprend :
une première ouverture (260) dans un composant
sensiblement cylindrique (134) dudit réseau éclair de DEL (130) ;
une seconde ouverture (262) dans un composant
sensiblement en forme de coupelle (132) dudit réseau éclair de DEL (130) ;
ladite seconde ouverture (262) ayant une circonférence
plus grande que celle de ladite première ouverture (160) ;
ledit composant sensiblement cylindrique (132) et
ledit composant sensiblement en forme de coupelle (134) étant raccordés via une ouverture partagée ;
un passage joignant ladite première ouverture (260) et
ladite seconde ouverture (262) à travers ledit composant sensiblement en forme de coupelle (132), ladite ouverture partagée et ledit composant sensiblement cylindrique (134), le passage joignant lesdits composants de sorte qu'un rayonnement électromagnétique puisse passer à travers ledit réseau éclair de DEL (130) ;
une pluralité de douilles de DEL (272) aménagées sur
ledit composant en forme de coupelle (132), dans lequel chacune desdites douilles de DEL (272) abrite une DEL infrarouge (IR) installée (138) ; et dans lequel :
ledit dispositif de commande (120) est à même de
déterminer une grandeur de rayonnement IR (136) délivrée par le réseau éclair de DEL IR au cours de l'impulsion sur la base de la durée de l'impulsion et de la grandeur de la puissance électrique fournie au cours de l'impulsion.

2. Dispositif d'imagerie thermique selon la revendication 1, comprenant une DEL IR (138) installée dans chacune desdites douilles de DEL (272).

3. Dispositif d'imagerie thermique selon la revendication 1 ou la revendication 2, dans lequel chacune desdites DEL IR (138) émet un rayonnement IR et un rayonnement en travers du restant du spectre électromagnétique lorsqu'un courant est appliqué, et dans lequel ledit rayonnement IR a une haute intensité par rapport audit rayonnement passant en travers du restant du spectre électromagnétique.

4. Dispositif d'imagerie thermique selon la revendication 3, dans lequel ledit rayonnement IR est constitué essentiellement de longueurs d'onde dans la plage inclusive de 770 nm à 1 mm.

5. Dispositif d'imagerie thermique selon l'une quelconque des revendications précédentes, dans lequel chacune desdites douilles de DEL (272) comprend des connexions électriques capables de connecter les DEL installées (138) à un dispositif de commande (120).

6. Dispositif d'imagerie thermique selon l'une quelconque des revendications précédentes, dans lequel chacune desdites douilles de DEL (272) est configurée autour dudit composant sensiblement en forme de coupelle (132) de sorte que les DEL installées partagent au moins un point focal (280).

7. Dispositif d'imagerie thermique selon l'une quelconque des revendications précédentes, dans lequel ledit composant sensiblement cylindrique (130) a la forme d'un tube.

8. Procédé de création d'une image thermique
comprenant les étapes consistant à :
générer un impulsion infrarouge (IR) en utilisant un réseau éclair de DEL (130) commandé par un dispositif de commande (120), ladite impulsion heurtant un objet, dans lequel ledit réseau éclair de DEL (130) comprend :
une première ouverture (260) dans un composant sensiblement cylindrique (134) dudit réseau éclair de DEL (130) ;
une seconde ouverture (262) dans un composant sensiblement en forme de coupelle (132) dudit réseau éclair de DEL (130) ;
ladite seconde ouverture (262) ayant une circonférence plus grande que celle de ladite première ouverture (260) ;
ledit composant sensiblement cylindrique (132) et ledit composant sensiblement en forme de coupelle (134) étant connectés via une ouverture partagée ;
un passage joignant ladite première ouverture (160) et ladite seconde ouverture (162) à travers ledit composant sensiblement en forme de coupelle (132), ladite ouverture partagée et ledit composant sensiblement cylindrique (134), le passage joignant lesdits composants de sorte qu'un rayonnement électromagnétique puisse passer à travers ledit réseau éclair de DEL (130) ; et
une pluralité de douilles de DEL (272) aménagées sur ledit composant en forme de coupelle (132), dans lequel chacune desdites douilles de DEL (272) abrite une DEL infrarouge (IR) installée (138) ;
capter le rayonnement IR (142) émis par l'objet en réponse à ladite impulsion en utilisant un capteur ;
déterminer l'épaisseur de l'objet sur la base d'une grandeur dudit rayonnement IR émis (142) en utilisant un dispositif de commande (120), ledit dispositif de commande (120) étant à même de déterminer une grandeur d'un rayonnement IR (136) délivré par le réseau éclair de DEL au cours de l'impulsion sur la base de la durée de l'impulsion et de la grandeur de la puissance électrique fournie au cours de l'impulsion.

9. Procédé selon la revendication 8, dans lequel ladite étape de génération d'une impulsion IR comprend en outre la génération d'un courant électrique court en utilisant ledit dispositif de commande (120), provoquant de la sorte ladite impulsion IR.

10. Procédé selon la revendication 9, dans lequel ledit courant électrique a une durée de moins de 3 ms.

11. Procédé selon la revendication 10, dans lequel ledit courant électrique est un courant électrique de faible puissance.

12. Procédé selon l'une quelconque des revendications 8 à 11, dans lequel ladite étape de génération d'une impulsion IR comprend l'émission d'une impulsion de rayonnement qui est constituée essentiellement d'un rayonnement IR.

13. Procédé selon la revendication 12, dans lequel ladite étape de génération d'une impulsion IR comprend l'impulsion d'une pluralité de DEL IR alignées simultanément, provoquant de la sorte une seule impulsion.
